# EUROPEAN PATENT SPECIFICATION

(11) **EP 0 455 647 B1**
(45) Date of publication and mention of the grant of the patent: **12.04.1995**
(21) Application number: 90901366.6
(22) Date of filing: 15.12.1989
(51) Int. Cl.: F16K 17/38

(54) **FIRE ISOLATION DEVICE**
FEUERSCHUTZ-ABSPERRVORRICHTUNG
DISPOSITIF D'ISOLATION CONTRE LE FEU

(30) Priority: 26.01.1989 US 302506
(43) Date of publication of application: 13.11.1991
(73) Proprietor: ITT INDUSTRIES, INC. (a Delaware corporation), New York, NY 10019-5490 (US)
(72) Inventor: FRIEND, Alden, Emerson, Valencia, CA 91355 (US); DUNHAM, Lawrence, Allen, Northridge, CA 91325 (US)
(74) Representative: Larsson, Sten
(86) International application number: PCT/US89/05623
(87) International publication number: WO 90/08912

(56) References cited:
- FR-A- 2 304 013
- US-A- 2 707 965

## Description

### Field of the Invention

This invention relates to a fire isolation device which is biased to close upon reaching a given temperature and more particularly to such a device including a fusible member holding a self-closing valve open prior to reaching the given temperature.

### Description of the Prior Art

U.S. Patent No. 3,245,423 Hansen, et al.; U.S. Patent No. 195,367 Hiller; U.S. Patent No. 1,930,624 Ryan and U.S. Patent No. 2,048,387 Johnsen all relate to valve couplings with fusible safety cutoff means. These devices are generally for lower temperature applications than that of the subject invention and all employ the use of a fusible material around the outside diameter of a member such that the material melts the member moves permitting a biased poppet to close a valve. They are used for applications such as boiler protection.

Another group of patents, U.S. Patent No. 2,305,841 Carlson, U.S. Patent No. 2,434,167 Knoblauch and U.S. Patent No. 2,850,297 Clark disclose quick disconnect couplers which are designed to prevent loss of fluid flow when the coupling is disconnected. These devices employ no fusible materials.

U.S. Patent No. 3,659,624 Kelly, et al., No. 3,842,853 Kelly, et al. and No. 3,896,835 Wicke all disclose gate valves. Kelly, et al. (3,659,624) employs a locking ring 50 of fusible material which when upon melting allows expansion of the locking fingers 52 permitting the gate valve to close. Kelly, et al. (3,896,853) employs a fusible disk 173 which upon melting is extruded through the port 171 permitting the piston member to close the gate valve. Wicke employs a similar structure. None of these last three references employ a fusible nose member in the flow path through the gate valve.

U.S. Patent No. 3,618,627 Wagner discloses a temperature responsive pressure relief employing a fusible material behind a spring biased poppet which opens upon over temperature.

U.S. Patent No. 4,225,760 Griffith, et al. discloses a pressure responsive valve which closes when plug 54 melts by means of fluid pressure such that there is some loss of fluid prior to closure.

U.S. Patent No, 4,792,115 Jindra et al. discloses a fusible member which upon exposure to excessive heat releases the valve members for movement from the open to closed condition under the influence of a biasing spring. Jindra et al. has a seal ring 52 which is unsuitable for operation at a high temperature such as 1092 °C (2000° F) for up to 15 minutes. Similarly, U.S. Patent No. 4,488,566 Hicks; U.S. Patent No. 2,586,248 Neuman et al.; U.S. Patent No. 1,022,119 Barton; and U.S. Patent No. 2,707,965 Allen employ fusible elements and spring biasing means. The latter discloses a fire isolation device having a passageway therethrough with a self- closing poppet valve closing said passageway in the valve closed position, and a nose member positioned to hold said valve in an open position. Said nose member has at least one aperture therethrough to provide a continuous fluid flow path through said device, and is made of a fusible material to melt prior to any attached component, permitting the nose member to collapse and the valve to close.

However none of these references are operable at a high temperature for the period of time required without a loss of fluid due to the materials or configurations employed in these valve arrangements.

British Patent No. 1,594,982 Brookes discloses a gas valve with an opening stem 23 and plate 24 which may be made of a thermoplastic material. Another gas type blocking valve is known from French Patent No. 2,304,013 Hartmann & Braun AG, wherein a fusible metal holds open the flanged end of a spring load valve. However, neither of these gas valve arrangements disclose the materials or structural configuration necessary to operating at high temperature such as 1092 °C (2000° F) for up to 15 minutes.

### SUMMARY OF THE INVENTION

In accordance with an aspect of the present invention, it is an object to provide a new and improved fire isolation device capable of operating at high temperatures such as 1092° C (2000° F) for up to 15 minutes which employs a fusible member through which the fluid normally flows which biases a valve poppet open.

Another object is to provide such a device which is bidirectional, having a valve member held open by a fusible nose member in both ends thereof.

A further object of the invention is to provide a fire isolation device to isolate line fluid in a fluid line operating at up to 20700 kPa (3000 psi).

The foregoing and other objects are accomplished by providing a fire isolation device according to claim 1, having a passageway therethrough with a self-closing valve having a stainless steel poppet and stainless steel seat disposed in the passageway, the poppet being biased toward the seat. A nose member in the form of a sleeve of fusible material having at least one aperture therethrough to provide a continuous fluid flow path through the device is positioned to hold the poppet open. The flow path in the outer end of the seat is dimensioned to fit the nose member and the flow path towards its inner end is larger in diameter than the nose member in the area occupied by the aperture through the nose member to permit flow therethrough when the nose member holds the valve in an open position. The nose member is made of a material designed to melt in the neighborhood of 371° C (700° F) when the device is exposed to 1092° C (2000° F) for 15 minutes, for example, after which it will collapse into the larger diameter permitting the bias to close the valve prior to any attached component melting, at, for example, 648° C (1200° F) preventing fluid loss through the component. The remainder of the parts of the device are also made of a high temperature resistant material.

In a second embodiment valve members and nose members are positioned in both ends of a device in the manner described above.

### BRIEF DESCRIPTON OF THE DRAWINGS

Other objects, features and advantages of the invention will become apparent from a reading of the specification when taken in conjunction with the drawings in which like reference numerals refer to like elements in the various views and in which:

FIG. 1 is a partially cut-away side view of an embodiment of the device of the subject invention designed for unitary flow, and

FIG. 2 is a cut-away side view of the device of the subject invention employing valve members in both ends thereof.

### DESCRIPTION OF THE PREFERRED EMBODIMENTS

The device of the subject invention is designed to prevent the fueling of fire by fluids in up to a 20700 kPa (3000 psi) system pressure line. When exposed to a high temperature flame such as 1092° C (2000° F) for 15 minutes the device will isolate line fluid in such a 20700 kPa (3000 psi) psi system from the fire prior to leakage and melting of any component to which it is connected. The device may be designed to be interchangeable for instance with an AN815 type fitting for direct mounting in the line.

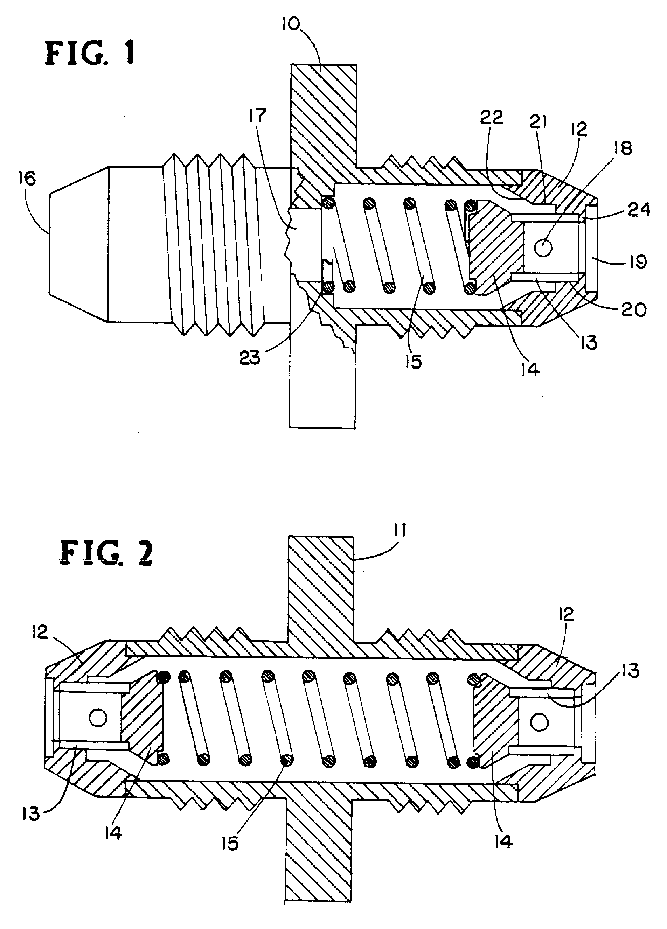

Referring to FIG. 1, the fire isolation device consists of a housing 10, an end seat 12, a nose member of fusible material 13, a valve poppet 14 and a compression spring 15. Housing 10, end seat 12, and poppet 14 are made of stainless steel, preferably 316L stainless steel, and spring 15 is also made of stainless steel, preferably 302B stainless steel. Fusible nose member 13 is made from thermoplastic, for example, polyetheretherketone thermoplastic (peek). Under normal operation the fluid flows in the entrance 16 to the device through the center aperture 17 around the spring 15 past the poppet 14 and through the nose member 13 through an aperture 18 therein and out the port 19. Spring 15 seats against a shoulder 23 in housing 10. The nose member 13 is positioned snugly in the inside diameter 20 on the outer end of seat 12 and up against flange 24 on end seat 12 which is integral therewith and has the same inside diameter as nose member 13. Seat 12 has a larger diameter 21 at its inner end through which the fluid normally flows to get to the aperture 18 and out port 19.

The device is designed to operate on exposure to an elevated temperature of about 1092° C (2000° F) for about 15 minutes. The fusible nose member 13 will melt upon reaching 371° C (700° F) and allow the spring loaded poppet 14 to close preventing fluid leakage through any attached component, not shown, which may melt at 648° C (1200° F), for example. The fusible nose member 13 will collapse into the larger diameter 21 and the poppet will seat against the beveled portion 22 of seat 12.

Thus, any component such as an aluminum instrument which might be attached to output port 19 will melt at approximately 658° C (1218° F) but the poppet 14 will have closed off the fuel source, not shown, attached to input port 16 preventing fuel from entering the area of the fire.

FIG. 2 discloses a bidirectional device in which the fitting 11 which has a single inside diameter and no shoulder 23 such as used in FIG. 1, employs nose members 12 on both ends thereof, each having its corresponding poppet 14 and fusible nose member 13. A common spring biases both poppet members 14 toward their respective seats.

The device of the subject invention is mechanically biased and operated as opposed to the prior art Griffith patent which is pressure operated and permits some leakage. The subject device prevents leakage by closing mechanically prior to failure of an attached component preventing loss of system fluid whereas the Griffith prior art device allows loss of system fluid until sufficient fluid flow under pressure occurs to create enough pressure drop across the poppet to cause closure.

The subject invention is a stand alone design requiring no outside mechanical influence for proper operation and functions in all positions with no effect on performance. The subject invention is designed to be used in any component or in a fluid line operating at up to 20700 kPa (3000 psi) and is designed in both single and dual poppet versions. The dual poppet version provides additional maintenance safety since it cannot be installed backwards and operates the same in either flow direction. The subject invention meets vibration and shock operating requirements for aircraft components.

Because of weight and cost many aircraft components are made of materials that cannot meet the fireproof (1092° C/2000° F) flame test for 15 minutes or even the fire resistant (1092° C/2000° F) flame test for 5 minutes.

It is critically necessary, when a fire takes place, to prevent fluid loss through the components, thus the invention has wide application as a fire isolation device in hydraulic systems, fluid systems, lube oil systems, and aircraft engines and other airborne applications. Other applications may include military equipment, such as tanks and submarines, as well as commercial or military cars, trucks, buses, and all types of ships. Other possible industrial uses include chemical plants, refineries and other fuel and oil processing plants. Numerous additional applications exist for use of the device in heating systems of various types.

## Claims

1. A fire isolation device being capable of operating at high temperatures such as 1092° C (2000° F) for up to 15 minutes, the housing (10) of said device having a passageway therethrough, with a self-closing valve having a poppet (14) and a seat (12) disposed in said passageway with said poppet (14) mechanically biased toward said seat (12) to a valve closed position closing the passageway through the device, wherein the poppet (14) and the seat (12) are made of stainless steel, a nose member in the form of a sleeve (13) of fusible material has at least one aperture (18) therethrough to provide a continuous fluid flow path through said deyice around said poppet (14) and through said seat (12) and is positioned to hold said valve in an open position against the bias on said poppet (14), said seat (12) has a flow path on its outer end dimensioned to fit said nose member (13) and a flow path towards its inner end larger in diameter than said nose member (13) in the area occupied by said a least one aperture (18) to permit flow therethrough when said nose member (13) holds said valve in an open position, and said nose member (13) is made of a material to melt prior to the melting of any attached component and will collapse into said larger diameter (21) after melting, permitting said bias to close the valve, the remainder of the parts of the device being made of higher temperature resistant material.

2. A fire isolation device according to claim 1 and operating at up to 20700 kPa (3000 psi), characterized in this that an end seat (12) is fitted to at least one end of said housing (10), said seat (12) including an inside diameter portion (20), a larger diameter portion (21), and a beveled portion and that one end of said nose member (13) is fitted to said inside diameter (20) and the other end is adapted to mount the poppet (14).

3. A bidirectional fire isolation device being capable of operating at high temperatures such as 1092° C (2000° F) for up to 15 minutes, the housing (10) of said device having a passageway therethrough, characterized in that a self-closing valve has a stainless steel poppet (14) and a stainless steel seat (12) disposed in each end of the passageway with each poppet (14) mechanically biased towards its seat (12) to a valve closed position closing the passageway through the device, that a nose member in the form of a sleeve (13) of fusible material in each end of said device has at least one aperture (18) therethrough to provide a continuous flow path through said device around said poppet (14) and through said seat (12) and each is being positioned to hold its respective valve in an open position against the bias on the poppet (14), that each seat (12) has a flow path on its outer end dimensioned to fit its nose member (13) and a flow path towards its inner end larger that the diameter of its nose member (13) in the area occupied by said at least one aperture (18) to permit flow therethrough when its nose (13) member holds the valve in an open position, and that said nose members (13) are of a material to melt prior to the melting of any attached component and will collapse each into their adjacent larger diameter (21) of their valve seats (12) after melting, permitting said bias to close the valves, the remainder of the parts of the device being made of higher temperature resistant material.

4. A fire isolation device according to claim 3 and operating at up to 20700 kPa (3000 psi), characterized in that each seat (12) has an outer end diameter (20) dimensioned to fit said nose member (13), and an inner end diameter (21) larger than said outer end diameter so that when each said nose member (13) holds said poppet (14) in the respective end in an open position, fluid flow is permitted through each nose member aperture (18) and said passageway, and that each said nose member (13) is of a material which melts at a temperature lower than the melting temperature of the material forming said poppet (14), seat (12), and housing (10), as well as bias means (15), such that when either said nose member (13) melts it collapses causing said poppet (14) in the respective end to seat on its associated seat (12) to prevent fluid flow through the device.

5. A fire isolation device according to claims 1 or 3 , characterized in that said housing (10), poppet (14) and seat (12) are made from stainless steel.

6. A fire isolation device according to claims 1 or 3 characterized in that said nose member (13) is made of polyetheretherketone thermoplastic.

7. A fire isolation device according to claims 1 or 3 characterized in that said housing has exterior threads at each end for mounting directly in said fluid line.

8. A device fire isolation according to claims 1 or 3, characterized in that said device meets the vibration and shock operating requirements for aircraft components.

9. A fire isolation device according to claims 1 or 3, characterized in that said bias means consist of a compression spring (15), which is made from stainless steel.

## Patentansprüche

1. Feuerschutz-Absperrvorrichtung, die zum Arbeiten bei hohen Temperaturen, wie 1092° C (2000° F) für bis zu 15 Minuten in der Lage ist, wobei sich durch das Gehäuse (10) der Vorrichtung eine Passage hindurcherstreckt, wobei ein selbstschließendes Ventil mit einem Tellerteil (14) und einem Sitz (12) in der Passage angeordnet ist und das Tellerteil (14) mechanisch in Richtung auf den Sitz (12) in eine geschlossene Ventilstellung zum Schließen der sich durch die Vorrichtung hindurcherstreckenden Passage vorgespannt ist, wobei das Tellerteil (14) und der Sitz (12) aus nicht-rostendem Stahl hergestellt sind, wobei ein Ansatzelement in Form einer Hülse (13) aus schmelzbarem Material wenigstens eine sich durch diese hindurcherstreckende Öffnung (18) aufweist, um einen kontinuierlichen Fluidströmungsweg durch die Vorrichtung um das Tellerteil (14) herum und durch den Sitz (12) hindurch zu schaffen, sowie zum Halten des Ventils in einer geöffneten Stellung gegen die auf das Tellerteil (14) wirkende Vorspannung positioniert ist, wobei der Sitz (12) an seinem äußeren Ende einen Strömungsweg, der zum Einpassen des Ansatzelements (13) dimensioniert ist, sowie einen Strömungsweg in Richtung auf sein inneres Ende aufweist, der einen größeren Durchmesser als das Ansatzelement (13) in dem von der wenigstens einen Öffnung (18) eingenommenen Bereich besitzt, um eine Strömung durch diesen hindurch zu ermöglichen, wenn das Ansatzelement (13) das Ventil in einer geöffneten Stellung hält, und wobei das Ansatzelement (13) aus einem Material hergestellt ist, das vor dem Schmelzen irgendeiner daran angebrachten Komponente schmilzt und nach dem Schmelzen in den größeren Durchmesser (21) kollabiert, wodurch die Vorspannung das Ventil schließen kann, und wobei die restlichen Teile der Vorrichtung aus einem Material hergestellt sind, das gegen höhere Temperaturen beständig ist.

2. Feuerschutz-Absperrvorrichtung nach Anspruch 1, die bei bis zu 20700 kPa (3000 psi) arbeitet,
dadurch gekennzeichnet, daß ein Endsitz (12) in wenigstens ein Ende des Gehäuses (10) eingepaßt ist, wobei der Sitz (12) einen Innendurchmesserbereich (20), einen Bereich (21) größeren Durchmessers und einen abgeschrägten Bereich aufweist, und daß das eine Ende des Ansatzelements (13) in den Innendurchmesser (20) eingepaßt ist und das andere Ende zur Anbringung des Tellerteils (14) ausgelegt ist.

3. In zwei Richtungen wirkende Feuerschutz-Absperrvorrichtung, die zum Arbeiten bei hohen Temperaturen, wie 1092° C (2000° F) für bis zu 15 Minuten in der Lage ist, wobei sich durch das Gehäuse (10) der Vorrichtung eine Passage hindurcherstreckt,
dadurch gekennzeichnet, daß ein selbstschließendes Ventil in jedem Ende der Passage angeordnet einen Tellerteil (14) aus nicht-rostendem Stahl und einen Sitz (12) aus nicht-rostendem Stahl aufweist ist und jedes Tellerteil (14) mechanisch in Richtung auf seinen Sitz (12) in eine geschlossene Ventilstellung zum Schließen der sich durch die Vorrichtung hindurcherstreckenden Passage vorgespannt ist, daß ein Ansatzelement in Form einer Hülse (13) aus schmelzbarem Material in jedem Ende der Vorrichtung wenigstens eine sich durch diese hindurcherstreckende Öffnung (18) aufweist, um einen kontinuierlichen Strömungsweg durch die Vorrichtung um das Tellerteil (14) herum und durch den Sitz (12) hindurch zu schaffen und jedes Ansatzelement zum Halten seines jeweiligen Ventils in einer geöffneten Stellung gegen die auf das Tellerteil (14) wirkende Vorspannung positioniert ist, daß jeder Sitz (12) an seinem äußeren Ende einen Strömungsweg, der zum Einpassen seines Ansatzelements (13) dimensioniert ist, sowie einen Strömungsweg in Richtung auf sein inneres Ende aufweist, der größer ist als der Durchmesser seines Ansatzelements in dem von der wenigstens einen Öffnung (18) eingenommenen Bereich, um eine Strömung durch diesen hindurch zu ermöglichen, wenn sein Ansatzelement (13) das Ventil in einer geöffneten Stellung hält, und daß die Ansatzelemente (13) aus einem Material bestehen, das vor dem Schmelzen irgendeiner daran angebrachten Komponente schmilzt, und nach dem Schmelzen jeweils in ihren benachbarten, größeren Durchmesser (21) ihrer Ventilsitze (12) kollabieren, wodurch die Vorspannung die Ventile schließen kann, und wobei die restlichen Teile der Vorrichtung aus einem Material hergestellt sind, das gegen höhere Temperaturen beständig ist.

4. Feuerschutz-Absperrvorrichtung nach Anspruch 3, die bei bis zu 20700 kPa (3000 psi) arbeitet,
dadurch gekennzeichnet, daß jeder Sitz (12) einen äußeren Enddurchmesser (20), der zum Einpassen des Ansatzelements (13) dimensioniert ist, sowie einen inneren Enddurchmesser (21) aufweist, der größer ist als der äußere Enddurchmesser, so daß dann, wenn jedes Ansatzelement (13) das Tellerteil (14) in dem jeweiligen Ende in einer geöffneten Stellung hält, eine Fluidströmung durch jede Ansatzelement-Öffnung (18) und die Passage hindurch ermöglicht ist, und daß jedes Ansatzelement (13) aus einem Material besteht, das bei einer niedrigeren Temperatur schmilzt als der Schmelztemperatur des Materials, aus dem das Tellerteil (14), der Sitz (12) und das Gehäuse (10) sowie die Vorspanneinrichtung (15) gebildet sind, so daß beim Schmelzen eines der beiden Ansatzelemente (13) dieses kollabiert und das Tellerteil (14) an seinem jeweiligen Ende zum Aufsitzen auf seinem zugehörigen Sitz (12) veranlaßt wird, um eine Fluidströmung durch die Vorrichtung hindurch zu verhindern.

5. Feuerschutz-Absperrvorrichtung nach Anspruch 1 oder 3,
dadurch gekennzeichnet, daß das Gehäuse (10), das Tellerteil (14) und der Sitz (12) aus nicht-rostendem Stahl hergestellt sind.

6. Feuerschutz-Absperrvorrichtung nach Anspruch 1 oder 3,
dadurch gekennzeichnet, daß das Ansatzelement (13) aus Polyätherätherketon-Thermoplast hergestellt ist.

7. Feuerschutz-Absperrvorrichtung nach Anspruch 1 oder 3,
dadurch gekennzeichnet, daß das Gehäuse zur direkten Anbringung in der Fluidleitung an jedem Ende ein Außengewinde aufweist.

8. Feuerschutz-Absperrvorrichtung nach Anspruch 1 oder 3,
dadurch gekennzeichnet, daß die Vorrichtung die Vibrations- und Stoß-Betriebsanforderungen für Luftfahrzeugkomponenten erfüllt.

9. Feuerschutz-Absperrvorrichtung nach Anspruch 1 oder 3,
dadurch gekennzeichnet, daß die Vorspanneinrichtung aus einer Druckfeder (15) besteht, die aus nichtrostendem Stahl hergestellt ist.

## Revendications

1. Dispositif d'isolation contre le feu capable de fonctionner à des températures telles que 1092°C (2000°F) jusqu'à quinze minutes, le châssis (10) dudit dispositif comportant un passage le traversant, muni d'une valve à fermeture automatique ayant une saillie (14) et un siège (12) disposés dans ledit passage, ladite saillie (14) étant sollicitée mécaniquement vers ledit siège (12) dans une position de fermeture de valve fermant le passage traversant le dispositif, dans lequel la saillie (14) et le siège (12) sont réalisés en acier inoxydable, un bec en forme de manchon (13) en matériau fusible a au moins une ouverture (18) le traversant pour fournir un trajet continu d'écoulement de fluide à travers ledit dispositif autour de ladite saillie (14) et à travers ledit siège (12) et est positionnée pour maintenir ladite valve dans une position ouverte à l'encontre de la sollicitation sur ladite saillie (14), ledit siège (12) a un trajet de circulation sur ses extrémités extérieures dimensionnées pour s'adapter audit nez (13) et un trajet d'écoulement vers son extrémité intérieure d'un diamètre plus large que ledit nez (13) dans la surface occupée par ladite au moins une ouverture (18) de façon à permettre un écoulement dans celle-ci lorsque ledit nez (13) maintient ladite valve dans une position ouverte, et ledit nez (13) est réalisé en matériau entrant en fusion avant la fusion d'un des composants attachés et tombe à l'intérieur dudit diamètre supérieur (21) après la fusion permettant par sollicitation de fermer la valve, le reste des parties du dispositif étant réalisé en matériau résistant à une température supérieure.

2. Dispositif d'isolation contre le feu selon la revendication 1, et fonctionnant à des pressions supérieures à 20700 kPa (3000 PSI), caractérisé en ce qu'un siège d'extrémité (12) est fixé à au moins une extrémité dudit châssis (10), ledit siège (12) comportant une partie de diamètre intérieur (20), une partie de diamètre supérieur (21), et une partie chanfreinée et en ce qu'une extrémité dudit nez (13) est adaptée audit diamètre intérieur (20) et l'autre extrémité est adaptée pour recouvrir la saillie (14).

3. Dispositif d'isolation bidirectionnel contre le feu capable de fonctionner à des températures telles que 1092°C (2000°F) jusqu'à quinze minutes, le boîtier (10) dudit dispositif comportant un passage le traversant, caractérisé en ce qu'une valve à fermeture automatique comporte une saillie (14) en acier inoxydable et un siège (12) en acier inoxydable disposés à chaque extrémité du passage avec chaque saillie (14) sollicitée mécaniquement vers son siège (12) dans une position de fermeture de valve fermant le passage traversant le dispositif, en ce qu'un nez en forme de manchon (13) en matériau fusible à chaque extrémité dudit dispositif comporte au moins une ouverture (18) le traversant pour fournir un trajet continu d'écoulement à travers ledit dispositif autour de ladite saillie (14) et à travers ledit siège (12) chacun étant positionné pour maintenir la valve respective dans une position ouverte à l'encontre de la sollicitation de ladite saillie (14), en ce que chaque siège (12) comporte un trajet d'écoulement sur ses extrémités extérieures dimensionnées pour s'adapter à ses nez (13) et un trajet d'écoulement vers ses extrémités inférieures dont la taille est plus grande que celle du diamètre du nez (13) dans la région occupée par ladite au moins une ouverture (18) de façon à permettre à du fluide de le traverser lorsque son nez (13) maintient la valve dans une position ouverte, et en ce que lesdits nez (13) sont réalisés en matériau ayant un point de fusion inférieur au point de fusion d'un des composants attachés et s'affaissent chacun dans les diamètres supérieurs adjacents (21) de leur siège de valve (12) après la fusion permettant par sollicitation de fermer les valves, le reste des parties du dispositif étant réalisé en matériau résistant à des températures supérieures.

4. Dispositif d'isolation contre le feu selon la revendication 3 et opérant à une pression supérieure 20700 kPa (3000 psi), caractérisé en ce que chaque siège (12) comporte un diamètre d'extrémité extérieure (20) dimensionné pour s'adapter audit nez (13), et un diamètre d'extrémité intérieur (21) de dimension supérieure audit diamètre d'extrémité supérieure de telle sorte que lorsque chacun desdits nez (13) maintient ladite saillie (14) dans l'extrémité respective selon une position ouverte, un écoulement de fluide peut traverser chaque ouverture de nez (18) et ledit passage et en ce que chaque nez (13) est réalisé en matériau dont le point de fusion se situe à une température inférieure à celle des matériaux formant ladite saillie (14) le siège (12) et le châssis (10) de même que les moyens de sollicitation (15), de telle sorte que lorsque l'un desdits nez (13) entre en fusion il s'affaisse causant ainsi l'appui de ladite saillie (14) dans l'extrémité respective contre son siège associé (12) pour éviter un écoulement de fluide à travers le dispositif.

5. Dispositif d'isolation contre le feu selon l'une des revendications 1 et 3, caractérisé en ce que ledit châssis (10), la saillie (14) et le siège (12) sont réalisés à partir d'acier inoxydable.

6. Dispositif d'isolation contre le feu selon l'une des revendications 1 et 3, caractérisé en ce que ledit nez (13) est réalisé en polyéther ether cetone thermoplastique.

7. Dispositif d'isolation contre le feu selon l'une des revendications 1 et 3, caractérisé en ce que ledit châssis comporte des lignes extérieures à chacune des extrémités destinées à être montées directement dans ladite ligne de fluide.

8. Dispositif d'isolation contre le feu selon l'une des revendications 1 et 3, caractérisé en ce que ledit dispositif répond aux exigences de fonctionnement relatives aux vibrations et aux chocs des composants destinés à l'aviation.

9. Dispositif d'isolation contre le feu selon l'une des revendications 1 et 3, caractérisé en ce que lesdits moyens de sollicitation sont constitués d'un ressort à compression (15), réalisé en acier inoxydable.
